# FASCICULE DE BREVET EUROPEEN

(11) **EP 2 429 365 B1**
(45) Date de publication et mention de la délivrance du brevet: **14.01.2015**
(21) Numéro de dépôt: 10728746.8
(22) Date de dépôt: 11.05.2010
(51) Int. Cl.: A47J 43/28, A47G 21/02, A47G 21/08, B25G 1/00, A46B 9/04

(54) **USTENSILE A FORME REGLABLE POUR PERSONNE A MOBILITE REDUITE ET SA FABRICATION**
UTENSIL MIT VERSTELLBARER FORM FÜR PERSONEN MIT EINGESCHRÄNKTER BEWEGUNGSFÄHIGKEIT UND HERSTELLUNG DAVON
UTENSIL HAVING AN ADJUSTABLE SHAPE FOR A PERSON WITH REDUCED MOBILITY, AND MANUFACTURE THEREOF

(30) Priorité: 14.05.2009 FR 0902320
(43) Date de publication de la demande: 21.03.2012
(73) Titulaire: Etablissements Saint Romain, 42000 Saint Etienne (FR)
(72) Inventeur: SAINT ROMAIN, Richard, F-42580 L'Etrat (FR); BAYLE, Sandrine, F-42450 Sury le Comtal (FR); LERGENMULLER, Thierry, F-42170 Saint Just Saint Rambert (FR)
(74) Mandataire: Perrier, Jean-Pierre
(86) Numéro de dépôt international: PCT/FR2010/050918
(87) Numéro de publication internationale: WO 2010/130949

(56) Documents cités:
- WO-A1-03/022111
- GB-A- 2 264 447
- US-A- 4 829 621
- US-A1- 2004 040 160

## Description

L'invention est relative à un ustensile, de table ou de toilette, à forme réglable pour personne à mobilité réduite, pouvant donc être mis en forme manuellement pour permettre à des enfants ou à une personne handicapée des bras ou des mains de pouvoir réaliser des fonctions essentielles, telles que manger ou se laver les dents.

L'invention concerne plus particulièrement les ustensiles composés d'une partie préhensible, d'une partie terminale venant en contact avec les aliments et/ou la bouche, telle que cuillère, fourchette ou brosse à dents, et d'une partie intermédiaire comprenant une âme métallique déformable plastiquement, comme décrit dans les documents WO 03/022111 et US 4 829 621.

Grâce à leur structure, ces ustensiles peuvent être conformés de manière que leur partie terminale utile forme par rapport à leur partie préhensible, ou manche, un angle vers la droite ou la gauche, et vers le haut ou le bas, adapté à la mobilité spatiale des mains de l'utilisateur.

En général, l'âme métallique conformable est noyée dans une matière plastique élastiquement déformable qui, lors des conformations, est soumise à des efforts de compression ou d'extension. Il en résulte que, dans le temps et par la répétition de conformations alternées, la couche de matière plastique peut subir des dommage et se craqueler en présentant des fentes formant des nids bactériens et permettant aux aliments et aux produits de nettoyage de venir oxyder l'âme métallique.

On connait par ailleurs, par US2004/0040160, un ustensile de manipulation de nourriture, tel qu'une spatule présentant un squelette métallique qui s'étendant du manche à la partie terminale est recouvert en totalité par une couche de matière plastique déformable protégeant le squelette contre les agressions thermiques, chimiques et bactériologiques. Si cette structure composite peut, dans une réalisation, présenter localement une certaine flexibilité permettant de plier la spatule pour quelle épouse la forme du fond d'un récipient, il ne s'agit que d'un pliage temporaire de faible valeur angulaire et dont la répétition ne peut pas être journalière.

Dans ces ustensiles connus, les efforts alternés répétés de compression-extension ont aussi pour conséquences de favoriser la séparation entre la matière plastique et l'âme métallique et, en présence de fentes dans la matière, de permettre les migrations de bactéries ou de produits non alimentaires entre l'âme et son enveloppe, au détriment de l'hygiène de l'ustensile.

Si de tels inconvénients sont peu fréquents avec les ustensiles pour enfant en bas ages, car la période d'utilisation est courte et la conformation est peu modifiée entre les services, leur probabilité augmente avec une utilisation continue nécessitant, à chaque repas, une adaptation personnalisée puis une remise à la forme standard pour faciliter l'entretien par des moyens automatiques de lavage.

Il en résulte qu'actuellement l'utilisation de ces ustensiles est limitée aux usages personnels, pour enfant en bas age ou pour handicapé au foyer, mais n'est pas envisagée pour un usage collectif, alors même que cela rendrait service aux utilisateurs et au personnel d'assistance.

L'objet de la présente invention est de fournir un ustensile à forme adaptable à chaque repas remédiant aux inconvénients des ustensiles actuels et présentant donc une meilleure cohésion entre l'âme métallique déformable plastiquement et sa matière plastique souple de surmoulage, pour diminuer dans cette matière la formation de craquelureset améliorer l'hygiène de l'ustensle.

A cet effet, dans l'ustensile selon l'invention qui est definie par les caractéristiques de la revendication 1, la liaison entre l'âme métallique de la partie Intermédiaire D et la couche de matière plastique élastiquement déformable, de nature viscoélastique, est assurée par une armature qui, en matière plastique rigide, forme des plots d'ancrage en plusieurs zones de la dite âme métallique et s'étend au moins du coté de la partie préhensible P, où son dos est recouvert par une couche de la matière plastique élastiquement déformable.

Ainsi, la matière plastique viscoélastique de surmoulage qui entoure, entre autres, la partie conformable de l'ustensile est liée à l'âme métallique, non seulement par adhérence, mais aussi de façon mécanique par les plots rigides formés sur cette âme. Il en résulte que, même en cas de sollicitations alternées et répétées de pliage et torsion, la matière souple reste adhérente à l'âme et sont éliminés les risques de fissurage et de délitage, pouvant générer des nids bactériens.

L'ustensile présente ainsi une fiabilité et une longévité qui permettent d'envisager son utilisation dans la restauration collective pour le service du repas et dans des conditions sévères, nécessitant à chaque service que le personnel d'assistance assure, successivement, une mise en forme adaptée au handicap de l'utilisateur et un redressement pour faciliter les opérations ultérieures de lavage et stockage.

Dans une forme d'exécution, l'armature rigide de la partie préhensible P présente, à son extrémité liée à l'âme métallique et en plusieurs points de son dos, des plots espacés saillant de son dos et servant à l'ancrage de la matière plastique élastiquement déformable.

Ces plots s'ajoutent à ceux de l'âme pour limiter entre eux les déplacements élastiques de la matière souple et déformable élastiquement, afin que la déformation de la matière entre deux plots reste dans le domaine élastique et ne devienne pas plastique, c'est-à-dire ne génère pas des efforts dépassant la limite élastique de la matière et provoquant des décohésions et/ou des fissures.

Avantageusement, les plots d'ancrage formés sur l'âme métallique comprennent au moins un plot extrême ménagé à l'extrémité libre de la dite âme et au moins un plot intermédiaire disposé entre les deux extrémités de cette âme, âme dont extrémité est noyée dans le plot extrême de l'armature de la partie préhensible P.

Dans une autre forme d'exécution, le plot extrême de l'armature se prolonge en direction de la partie terminale T par une palette qui, constituant le noyau de la cuillère ou de la fourchette, est bordée par des ailettes espacées de positionnement et de retenue d'un bourrelet en matière plastique élastiquement déformable amortissant le contact de l'ustensile avec la bouche ou les dents.

Cet aménagement est particulièrement apprécié par les personnes maitrisant mal leurs mouvements, puisqu'il réduit considérablement les risques de blessures provoquées par un contact énérgique de l'extrémité de l'ustensile avec les lèvres ou l'intérieur de la bouche.

L'invention concerne aussi le procédé de fabrication de l'ustensile, avec les caractéristiques de la revendication 9, consistant :
- à réaliser, dans une première phase et par surmoulage d'une matière plastique rigide sur un tronçon de fil métallique, un sous ensemble E composé de l'âme métallique et de l'armature d'au moins la partie préhensible P, cette armature étant liée à l'âme métallique par des plots d'ancrage, extrêmes et autres ;
- puis, dans une phase suivante et après ébarbage du sous ensemble E, à surmouler sur lui une matière plastique élastiquement déformable enveloppant l'âme métallique et ses plots, au moins le dos de l'armature de la partie préhensible P et au moins le plot extrême et la périphérie de la partie terminale T.

Ce procédé ajoute au procédé habituel une phase préalable de formation d'un sous ensemble d'armature qui améliore la cohésion ultérieure entre la matière souple de surmoulage et l'âme métallique.'

Avantageusement, le procédé consiste, dans la première phase, à positionner le tronçon de fil constituant l'âme métallique par rapport à l'empreinte de l'armature de la partie préhensible, en le pinçant sur sa plus grande longueur entre le deux empreintes réalisant sur lui les plots d'ancrage pour le surmoulage suivant.

Ainsi, la tige formant l'armature est toujours parfaitement positionnée dans le moule avant injection de la matière plastique rigide formant l'armature, ce qui supprime tous risques de malfaçons, visibles ou non.

D'autres caractéristiques et avantages ressortiront de la description qui suit en référence au dessin schématique annéxé montrant plusieurs formes de réalisation d'ustensiles selon l'invention.
Figure 1 est une vue partielle de coté et en coupe d'un moule permettant de réaliser l'armature, avant injection et quand les deux parties de ce moule pincent l'âme métallique ;
Figures 2 et 3 sont des vues, respectivement, de coté en coupe et en perspective de l'armature obtenue ;,
Figure 4 est une vue de coté en coupe d'une forme d'exécution d'un ustensile obtenu par surmoulage de l'armature des figures 2 et 3 ;
Figure 5 est une vue en coupe selon V-V de figure 4 ;
Figure 6 et 7 sont des vues en élévation, respectivement, en perspective de coté et en plan par-dessus, de l'ustensile de figure 4 ;
Figures 8 à 12 sont des vues en perspective montrant différents ustensiles selon l'invention ;
Figures 13 et 14 sont des vues en perspectives, respectivement par-dessus et par-dessous, d'une autre forme d'exécution de l'armature E pour une fourchette ;
Figure 15 à 16 sont des vues en perspectives, respectivement par-dessus et par-dessous, de la fourchette obtenue par surmoulage de l'armature des figures 13 et 14 ;
Figure 17 est uen vue en perspective d'une forme d'exécution du fil métallique constituant l'âme de l'ustensile ;
Figures 18 et 19 sont des vues en perspectives, respectivement par-dessus et par-dessous, d'une autre forme d'exécution de l'armature E pour une cuillère ;
Figure 20 à 21 sont des vues en perspectives, respectivement par-dessus et par-dessous, de la cuillère obtenue par surmoulage de l'armature des figures 18 et 19 ;

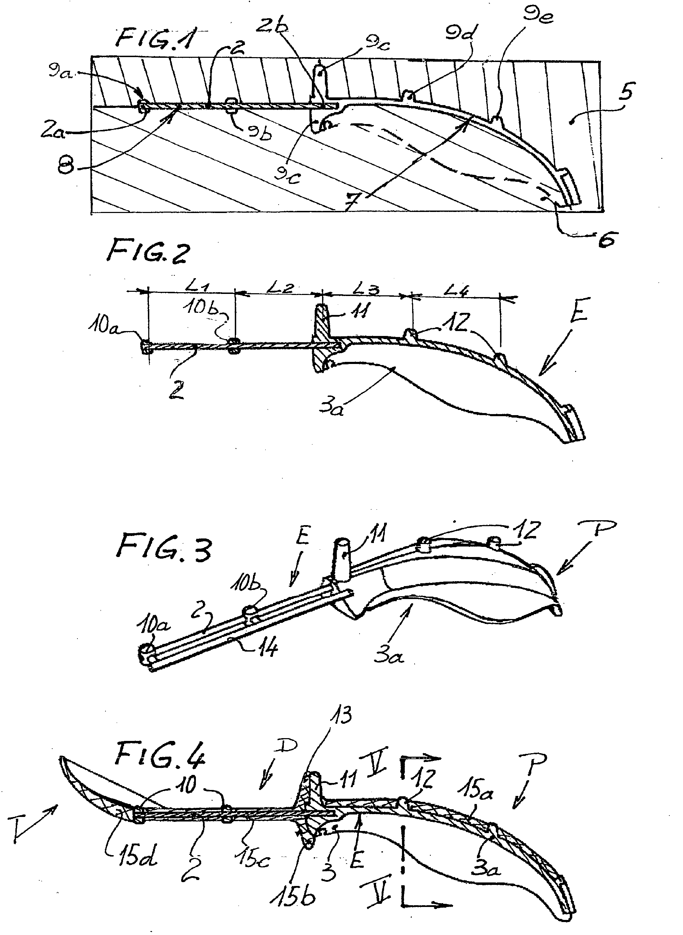

De manière générale, et comme montré à la figure 4, un ustensile de table ou de service est composé d'une partie préhensible P, d'une partie extême ou terminale T, venant en contact avec les aliments et/ou la bouche, et d'une partie intermédiaire D pouvant être conformée à la demande, dans une plage de déformation intuitive, limitée angulairement par le bon sens..

L'ustensile selon l'invention comprend :
- un tronçon 2 de fil métallique, de préférence en acier inoxydable recuit,
- une armature 3, en matière plastique rigide,
- et une enveloppe de surmoulage 15 en matière plastique souple, c'est-à-dire élastiquement déformable et, de manière préférée, choisie parmi les matières viscoélastiques.

L'armature 3 est obtenue à l'aide d'un moule qui, comme montré à la figure 1, est composé d'au moins deux éléments 5 et 6 dans lesquels sont réalisées des empreintes, respectivement, 7 de l'armature proprement dite et 8 pour loger et positionner le tronçon 2 de fil. Les éléments de moule comprennent aussi des empreintes 9a, 9b, 9c, 9d et 9e, respectivement, pour la formation autour du tronçon 2 de fil, de plots 10a, 10b et 11, et, pour la formation de plots 12 sur le dos de l'armature 3 de la partie préhensible P.

Cette figure 1 montre bien que l'empreinte 8 recevant le tronçon 2 de fil, est conçue pour le pincer en assurant son positionnement aussi bien dans le plan qui lui est assigné, par rapport à la partie préhensible P, que longitudinalment. Ainsi, l'extrémité 2a du tronçon coïncide avec l'empreinte 9a pour le plot extrême 10a quand son extrémité 2b est dans l'empreinte 9c, correspondant à la partie d'armature renforçant la zone de la mitre 13 de la partie préhensible P.

Lorsque la matière plastique rigide est injectée dans l'empreinte, par des canaux non visibles au dessin, le tronçon de fil 2, qui est parfaitement maintenu, reste dans sa position, de sorte que, après refroidissement et démoulage, l'armature et le fil forment le sous ensemble E, montré aux figures 2 et 3.

A la figure 3, les plots 10a, 10b et 11, qui sont disposés autour du fil métallique 2, sont encore liés à leur carotte d'injection 14, alors que celle ci fait partie des éléments enlevés par un ébavurage préalable à la réalisation de la phase ultérieure. Ces plots comprennent au moins un plot extrême 10a ménagé à l'extrémité libre 2a de l'âme 2 et au moins un plot 10b disposé entre les extrémités 2a et2b du fil.

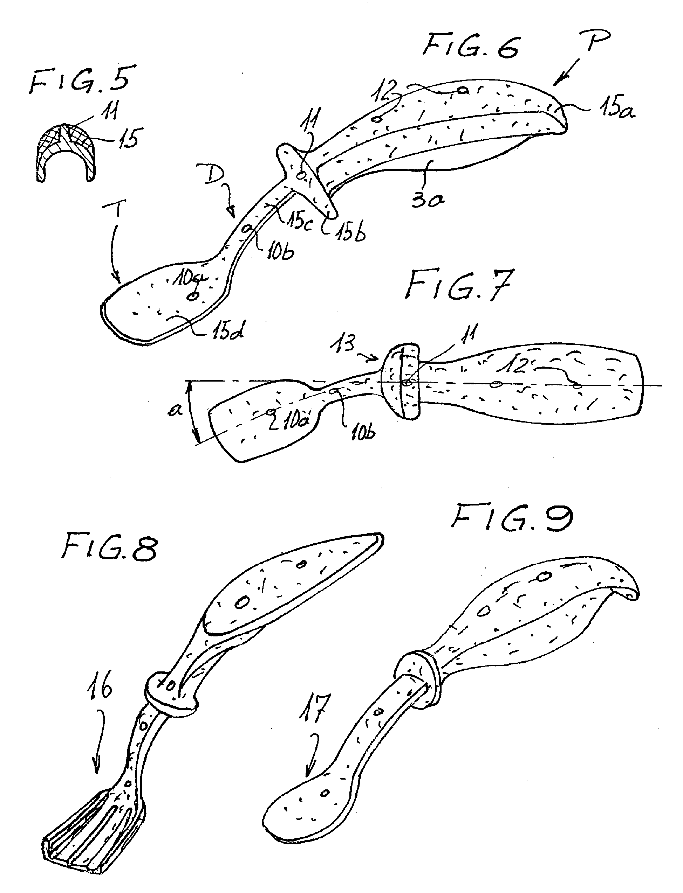

Comme le montre les figures 3 et 5, l'armature 3 présente dans la partie préhensible P une section transversale une forme en C et, en saillie de son dos, les plots 11 et 12, qui sont dans l'alignement de ceux 10 ménagés autour du fil 2. Les intervalles L1 à L4 entre les différents plots 10a, 10b, 11 et 12 sont sensiblement de même valeur K, comme montré à la fgigure 2.

Après ébarbage, le sous ensemble E est à nouveau disposé dans un moule de surmoulage, non représenté, dans lequel il reçoit de la matière plastique élastiquement déformable qui, comme montrée à la figure 4 forme :
- une couche 15a recouvrant le dos de l'armature 3,
- une couche 15b formant la mitre 13,
- une couche 15c enveloppant le fil 2,
- et une couche 15d formant la partie terminale T, représentée comme étant une cuillère.

La figure 4 montre bien que, de préférence, l'épaisseur de la couche de matière souple est au plus égale à la hauteur des plots 10 à 12, afin que les contraintes d'extension ou de compression affectant la matière de la couche d'un coté d'un plot ne puissent pas se communiquer de l'autre coté.

En sortie de moule l'ustensile présente la forme montrée à la figure 6, c'est-à-dire avec la partie terminale T dans le prolongement de la partie préhensible.

Pour conformer l'ustensile, il suffit de saisir la partie préhensible P dans une main, sa partie terminale T dans l'autre main et de déplacer cette dernière dans l'espace jusqu'à ce que, par déformation de la partie intermédiaire D, l'outil et par exemple la cuillère 15d, occupe la position souhaitée, adaptée au besoin de l'utilisateur, par exemple celle de figure 7. Cette conformation est permise par la déformation élastique du fil 2 entre la mitre 13 de l'ustensile et le plot extrême 10a, mais aussi par le caractère viscoélastique de la couche 15c enveloppant ce fil 2. On notera d'ailleurs que les plots 10a, 10b, limitent les déplacements longitudinaux de la couche 15c, tant en extension qu'en compression et évitent que cette couche se délite du fil 2.

A titre d'exemple, la matière rigide constitutive de l'armature est choisie parmi les polypropylènes, homopolymères ou copolymères, tandis que la matière élastiquement déformable et viscoélastique est en polypropylène modifié et de qualité alimentaire, ayant une dureté shore A de 40.

Les figures 8 et 9 montrent que la structure d'ustensile selon l'invention s'applique à divers couverts de table et, par exemple, à une pelle fouchette 16 à la figure 8 et à une petite cuillère à la figure 9, ces ustensiles pouvant d'ailleurs être surmoulés sur le même sous ensemble E.

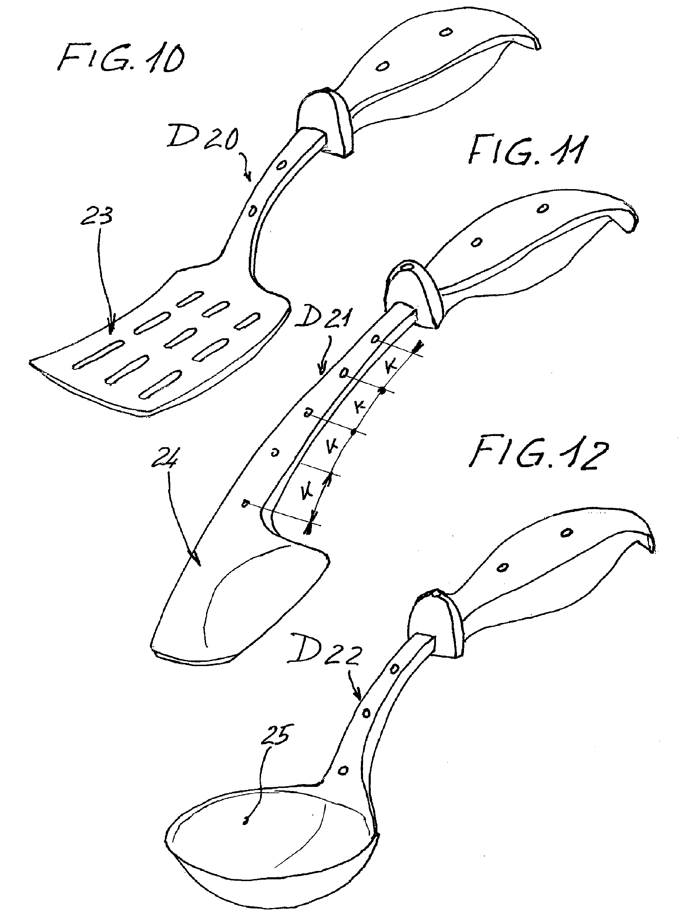

La structure selon l'invention peut aussi être transposée à des ustensiles de cuisine, privée ou collective, comprenant des parties intermédiaires conformables plus longues comme montré en D20, D21 et D22 aux figures 10 à 12 concernant, respectivement une pelle 23, une spatule 24 et une louche 25. Ces figures montrent que les plots d'ancrage 10 sont en plus grands nombre, mais répartis avec sensiblement le même pas K que das la forme d'exécution des figures 1 à 9.

Dans ces applications à la cuisine, la conformabilité est utilisée pour adapter l'ustensile à une fonction de service particulière nécessitant une orientation non habituelle de l'outil terminal. S'agissant d'ustensiles utilisés fréquemment et dans les mêmes conditions, ils ne sont pas remis en forme après conformation, mais conservés en l'état jusqu'à une prochaine utilisation.

Dans cette application, l'invention permet d'utiliser des ustensiles conformés respectant les régles d'hygiène très longtemps, puisque la matière souple de surmoulage est peu sollicitée.

Dans ce genre d'application, l'âme métallique déformable plastiquement est constituée par un fil métallique de plus grande section, de façon à offrir une résistance à la déformation telle que l'ustensile puisse être déformé à la demande, manuellement ou avec des outils, mais qu'il ne puisse pas se redresser de manière involontaire, par exemple sous l'action de la résistance offerte par les aliments brassés dans une cuve.

Avec un fil en acier inoxydable recuit, le diamètre utilisé pour des ustensiles ménagers est de l'ordre de 2,5 milimètres alors que pour des ustensiles de service en cuisine il est de l'ordre de 3,5 à 4 millimètres.

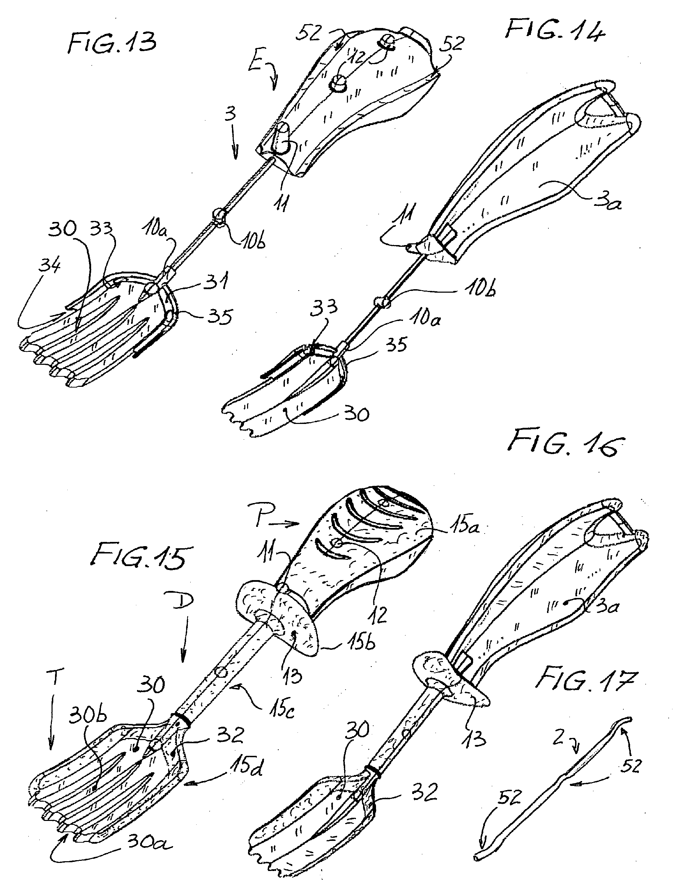

Les formes d'exécution des figures 13 à 21 se différencient des précédentes par le fait que le plot extrême 10a de l'armature 3 se prolonge en direction de la partie terminale T par une palette 30 ou 40 constituant, respectivement, la partie centrale de la fourchette ou de la cuillère. Chaque palette 30 ou 40 est bordée par des ailettes 31 ou 41 participant au positionnement et à la retenue d'un cordon 32 ou 42 qui, en matière plastique élastiquement déformable, amortit le contact de l'ustensile avec la bouche ou les dents.

Les figures 13 et 14 montrent que dans les ailettes 31 des palettes 30 sont ménagés des trous 33 et des encoches extrêmes 34 constituant, avec un jonc périphérique 35, des moyens d'accrochage du cordon 32. Pour la fourchette et comme montré aux figures 15 et 16, ce cordon 32 s'étend longitudinalement depuis l'extrémité de la partie intermédiaire D, (du plot 10a) jusqu'à sensiblement l'extrémité 30a de la denture 30b de la palette 30, sans passer devant cette extrémité, de manière à laisser du mordant à celle-ci.

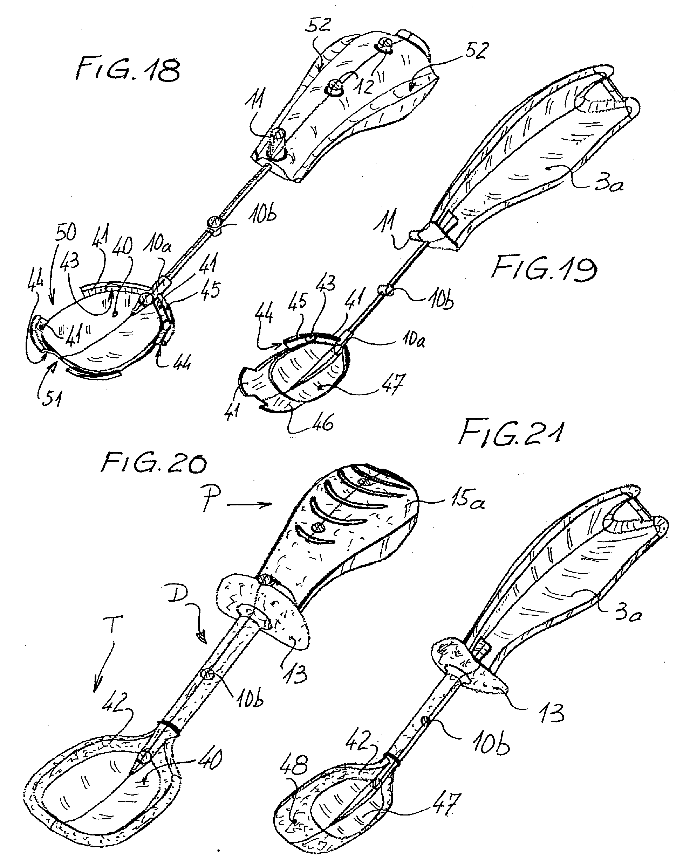

Comme montré aux figures 18 et 19, les ailettes 41 bordant la palette 40 pour la cuillère sont interrompues longitudinalement en 50 et transversalement et en bout en 51, pour former des zones qui, après surmoulage du cordon 42, présentent une plus grande souplesse et absorbent meiux les chocs de contact. Les ailettes 41 sont aussi traversées par des trous 43, qui avec les crans 44 formés dans leurs zones d'interruption 50 et 51 et avec un jonc 45, constitue le moyens d'accrochage du cordon 42 qui ceinture la palette 40.

Les figures 19 et 21 montrent que la partie convexe et dorsale de la palette 40 comporte, près de son extrémité libre, un épaulement 46 juxtaposé à un bossage 47 prolongeant le plot 10a. Lors du surmoulage, la matière viscoélastique 15, qui forme le cordon périphérique 42, s'écoule dans l'épaulement 46 pour former une semelle 48. Quand celle-ci rencontre les lèvres, la bouche ou les dents de l'utilisateur elle procure un contact beaucoup plus souple et agréable que celui procuré par la matière plastique rigide constituant le bossage 47.

En outre pour que le contact avec la main ne soit pas géné par des bavures dans les zones de rencontre entre les matières, respectivement, rigide de l'armature et souple du surmoulage, l'armature en matière plastique rigide 3 présente, dans sa partie 3a formant la partie préhensible P, deux gorges longitudinales 52 (visibles figures 13 et 18) de positionnement et de retenue de la couche de matière plastique viscoélastique 15. Grace à cela, le plan de joint entre les empreintes des moules de surmoulage peut être disposé sur les cotés de la partie convexe du manche et être insensible aux variations des conditions de fermeture de ces empreintes, génératrices des bavures.

A la figure 17, l'âme métallique 2 présente dans les zones où elle va recevoir les plots 10 a, 10b et 11 des déformations en V 53, favorisant l'ancrage sur elle de la matière plastique rigide et, en conséquence, la retenue de lam atière plastique viscoélastique 15 de surmoulage.

Les diverse structures avec parties intermédiaires pliables à la demande qui viennent d'être décrites peuvent aussi être appliquées aux ustensiles de toilettes, tels que brosse à dents, brosses diverses...

## Revendications

1. Ustensile de table ou de toilette à forme règlable, pour personne à mobilité réduite, composé d'une partie préhensible P, d'une partie terminale T venant en contact avec les aliments et/ou la bouche et d'une partie intermédiaire D comprenant une âme métallique (2) déformable plastiquement et noyée dans une matière plastique élastiquement déformable (15) **caractérisé en ce que** la liaison entre l'âme métallique (2) de la partie Intermédiaire D et la couche (15) de matière plastique élastiquement déformable, de nature viscoélastique, est assurée par une armature (3) qui, en matière plastique rigide, forme des plots d'ancrage (10) en plusieurs zones de la dite âme métallique (2) et s'étend (en 3a) au moins du coté de la partie préhensible P, où son dos est recouvert par une couche (15a) de là matière plastique élastiquement déformable (15).

2. Ustensile de table ou de toilette à forme règlable, pour personne à mobilité réduite, selon la revendication 1 **caractérisé en ce que** l'armature rigide (3) de la partie préhensible P présente, à son extrémité liée à l'âme métallique (2) et en plusieurs points de son dos, des plots espacés (11, 12) saillant de son dos et servant à l'ancrage de la couche (15a) de matière plastique élastiquement déformable (15).

3. Ustensile de table ou de toilette à forme règlable, pour personne à mobilité réduite, selon la revendication 1 **caractérisé en ce que** les plots d'ancrage (10) formés sur l'âme métallique (2) comprennent au moins un plot extrême (10a) ménagé à l'extrémité libre (2à) de la dite âme (2) et au moins un plot intermédiaire (10b) disposé entre la dite extrémité (2a) et l'autre extrémité (2b), cette extrémité étant noyée dans le plot extrême (11) de l'armature (3a) de la partie préhensible P.

4. Ustensile de table ou de toilette à forme règlable, pour personne à mobilité réduite selon la revendication 1, **caractérisé en ce que** la matière constituant l'armature (3) de la partie préhensible est en polypropylène, homopolymère ou copolymère.

5. Ustensile de table ou de toilette à forme règlable, pour personne à mobilité réduite selon la revendication 1, **caractérisé en ce que** la matière plastique élastiquement déformable (15) est en polypropylène modifié et de qualité alimentaire.

6. Ustensile de table ou de toilette à forme règlable, pour personne à mobilité réduite, selon la revendication 1 **caractérisé en ce que**, l'armature en matière plastique rigide (3) présente, dans sa partie (3a) formant la partie préhensible P, deux gorges longitudinales (52) de positionnement et de retenue de la couche de matière plastique viscoélastique (15).

7. Ustensile de table ou de toilette à forme règlable pour personne à mobilité réduite,selon la revendication 1 **caractérisé en ce que** le plot extrême (10a) de l'armature (3) se prolonge en direction de la partie terminale T par une palette (30, 40) qui, constituant la partie centrale de la fourchette ou de la cuillère, est bordée par des ailettes espacées (31, 41) de positionnement et de retenue d'un cordon (32, 42) en matière plastique élastiquement déformable amortissant le contact de l'ustensile avec la bouche ou les dents.

8. Ustensile de table ou de toilette à forme réglable pour personne à mobilité réduite, selon les revendications 1 et 7 prise ensemble **caractérisé en ce que** chacune des ailettes (31, 41) est bordée par un jonc (35, 45) et est munie de moyens d'ancrage (33 et 34, 43 et 44) de la matière élastiquement déformable constituant les cordons externes (32, 42).

9. Procédé de fabrication d'un ustensile de table ou de toilette à forme réglable pour personne à mobilité réduite, cet ustensile étant composé d'une partie préhensible P, d'une partie terminale T venant en contact avec des aliments et/ou la bouche et d'une partie intermédiaire D comprenant une âme métallique (2) déformable plastiquement, et dans lequel, comme défini dans la revendication 1, l'âme métallique (2) est liée à l'armature rigide (3) de la partie préhensible P et est recouverte par une matière élastiquement déformable (15), **caractérisé en ce qu'**il consiste :
- à réaliser, dans une première phase et par surmoulage d'une matière plastique rigide sur un tronçon de fil métallique (2), un sous ensemble E composé de l'âme métallique (2) et de l'armature (3) d'au moins la partie préhensible P, cette armature étant liée à l'âme métallique par des plots d'ancrage (10a, 10b et 11) ;
- puis, dans une phase suivante et après ébarbage du sous ensemble E, à surmouler sur lui la matière plastique élastiquement déformable (15) enveloppant l'âme métallique (2) et ses plots (10), au moins le dos de l'armature (3) de la partie préhensible P et au moins le plot extrême (10a) et la périphérie de la partie terminale T.

10. Procédé de fabrication d'un ustensile de table ou de toilette selon la revendication 9 **caractérisé en ce qu'**il consiste, dans la première phase, à positionner le tronçon de fil métallique (2) par rapport à l'empreinte (7) de l'armature (3) en le pinçant sur sa plus grande longueur entre les deux éléments de moule (5, 6) qui réalisent sur lui les plots d'ancrage (10a, 10b, 11).

## Patentansprüche

1. Tisch- oder Toilettenutensil mit verstellbarer Form für Personen mit eingeschränkter Bewegungsfähigkeit, das sich aus einem Griffteil P, einem terminalen Teil T, der mit den Nahrungsmitteln und/oder dem Mund in Kontakt kommt, und einem Übergangsteil D, der einen plastisch verformbaren und in ein elastisch verformbares Kunststoffmaterial (15) eingelassenen Metallkern (2) umfasst, zusammensetzt, **dadurch gekennzeichnet, dass** die Verbindung zwischen dem Metallkern (2) des Übergangsteils D und der elastisch verformbaren Kunststoffmaterialschicht (15) viskoelastischer Natur durch eine Armierung (3) sichergestellt ist, die aus starrem Kunststoffmaterial in mehreren Zonen des Metallkerns (2) Verankerungsstifte (10) bildet und sich (in 3a) mindestens an der Seite des Griffteils P erstreckt, wobei ihr Rücken von einer Schicht (15a) des elastisch verformbaren Kunststoffmaterials (15) bedeckt ist.

2. Tisch- oder Toilettenutensil mit verstellbarer Form für Personen mit eingeschränkter Bewegungsfähigkeit nach Anspruch 1, **dadurch gekennzeichnet, dass** die starre Armierung (3) des Griffteils P an ihrem mit dem Metallkern (2) verbundenen Ende und an mehreren Stellen ihres Rückens beabstandete, aus ihrem Rücken herausragende Stifte (11, 12) aufweist, die zur Verankerung der Schicht (15a) aus elastisch verformbaren Kunststoffmaterial (15) dienen.

3. Tisch- oder Toilettenutensil mit verstellbarer Form für Personen mit eingeschränkter Bewegungsfähigkeit nach Anspruch 1, **dadurch gekennzeichnet, dass** die auf dem Metallkern (2) geformten Verankerungsstifte (10) mindestens einen extremen Stift (10a) umfassen, der am freien Ende (2a) des Kerns (2) ausgebildet ist und mindestens einen Übergangsstift (10b), der zwischen dem Ende (2a) und dem anderen Ende (2b) angeordnet ist, wobei dieses Ende in den extremen Stift (11) der Armierung (3a) des Griffteils P eingelassen ist.

4. Tisch- oder Toilettenutensil mit verstellbarer Form für Personen mit eingeschränkter Bewegungsfähigkeit nach Anspruch 1, **dadurch gekennzeichnet, dass** das die Armierung (3) des Griffteils bildende Material aus Polypropylen, Homopolymer oder Copolymer ist.

5. Tisch- oder Toilettenutensil mit verstellbarer Form für Personen mit eingeschränkter Bewegungsfähigkeit nach Anspruch 1, **dadurch gekennzeichnet, dass** das elastisch verformbare Kunststoffmaterial (15) aus modifiziertem Polypropylen und in Lebensmittelqualität ist.

6. Tisch- oder Toilettenutensil mit verstellbarer Form für Personen mit eingeschränkter Bewegungsfähigkeit nach Anspruch 1, **dadurch gekennzeichnet, dass** die Armierung aus starrem Kunststoffmaterial (3) in ihrem den Griffteil P bildenden Teil (3a) zwei Längsrillen (52) für die Positionierung und den Halt der Schicht aus viskoelastischem Kunststoffmaterial (15) aufweist.

7. Tisch- oder Toilettenutensil mit verstellbarer Form für Personen mit eingeschränkter Bewegungsfähigkeit nach Anspruch 1, **dadurch gekennzeichnet, dass** sich der extreme Stift (10a) der Armierung (3) in Richtung des terminalen Teils T durch eine Platte (30, 40) verlängert, die, indem sie den zentralen Teil der Gabel oder des Löffels bildet, von beabstandeten Flügeln (31, 41) für die Positionierung und den Halt eines Streifens (32, 42) aus elastisch verformbaren Material gesäumt ist, der den Kontakt des Utensils mit dem Mund oder den Zähnen dämpft.

8. Tisch- oder Toilettenutensil mit verstellbarer Form für Personen mit eingeschränkter Bewegungsfähigkeit nach den Ansprüchen 1 und 7, gemeinsam herangezogen, **dadurch gekennzeichnet, dass** jeder der Flügel (31, 41) von einer Wulst (35, 45) gesäumt ist und mit Verankerungsmitteln (33 und 34, 43 und 44) des elastisch verformbaren, die externen Streifen (32, 42) bildenden Materials ausgestattet ist.

9. Herstellungsverfahren eines Tisch- oder Toilettenutensil mit verstellbarer Form für Personen mit eingeschränkter Bewegungsfähigkeit, wobei sich dieses Utensil aus einem Griffteil P, einem terminalen Teil T, der mit den Nahrungsmitteln und/oder dem Mund in Kontakt kommt, und einem Übergangsteil D, der einen plastisch verformbaren Metallkern (2) umfasst, zusammensetzt, wobei, wie in Anspruch 1 definiert, der Metallkern (2) mit der starren Armierung (3) des Griffteils verbunden und mit einem elastisch verformbaren Material (15) bedeckt ist, **dadurch gekennzeichnet, dass** es darin besteht:
- in einer ersten Phase Herstellen durch Overmoulding eines starren Kunststoffmaterials auf einem Abschnitt eines Metalldrahts (2) einer Untereinheit E, die aus dem Metallkern (2) und der Armierung (3) mindestens des Griffteils P besteht, wobei diese Armierung mit dem Metallkern durch Verankerungsstifte (10a, 10b und 11) verbunden ist,
- danach, in einer folgenden Phase und nach Entgraten der Untereinheit E, dem Overmoulding auf diesem des elastisch verformbaren Kunststoffmaterials (15), das den Metallkern (2) und seine Stifte (10), mindestens den Rücken der Armierung (3) des Griffteils P und mindestens den extremen Stift (10a) und den Umfang des terminalen Teils T umhüllt.

10. Herstellungsverfahren eines Tisch- oder Toilettenutensils nach Anspruch 9, **dadurch gekennzeichnet, dass** es darin besteht, in der ersten Phase den Abschnitt des Metalldrahts (2) im Verhältnis zum Abdruck (7) der Armierung (3) zu positionieren, indem er über seine größte Länge zwischen den zwei Formelementen (5, 6) festgeklemmt wird, die auf ihm die Verankerungsstifte (10a, 10b, 11) realisieren.

## Claims

1. An eating or toilet implement with an adjustable shape, for a person with reduced mobility, made up of a gripping part P, an end part T coming into contact with food and/or the mouth and an intermediate part D including a plastically deformable metal core (2) embedded in an elastically deformable plastic material (15), **characterized in that** the connection between the metal core (2) of the intermediate part D and the layer (15) of elastically deformable plastic material, of a viscoelastic nature, is ensured by a frame (3) made from rigid plastic, which forms anchoring studs (10) in several areas of said metal core (2) and extends (at 3a) at least on the side of the gripping part P, where its back is covered by a layer (15a) of the elastically deformable plastic material (15).

2. The eating or toilet implement with an adjustable shape, for a person with reduced mobility, according to claim 1, **characterized in that** the rigid frame (3) of the gripping part P has, at its end connected to the metal core (2) and several points on its back, studs (11, 12) spaced apart protruding from its back, and serving to anchor the layer (15a) of elastically deformable plastic material (15).

3. The eating or toilet implement with an adjustable shape, for a person with reduced mobility, according to claim 1, **characterized in** the anchor studs (10) formed on the metal core (2) include at least one end stud (10a) arranged at the free end (2a) of said core (2) and at least one intermediate stud (10b) positioned between said end (2a) and the other end (2b), that end being embedded in the end stud (11) of the frame (3a) of the gripping part P.

4. The eating or toilet implement with an adjustable shape, for a person with reduced mobility, according to claim 1, **characterized in that** the material in the frame (3) of the gripping part is made from polypropylene, homopolymer or copolymer.

5. The eating or toilet implement with an adjustable shape, for a person with reduced mobility, according to claim 1, **characterized in that** the elastically deformable plastic material (15) is food-grade modified polypropylene.

6. The eating or toilet implement with an adjustable shape, for a person with reduced mobility, according to claim 1, **characterized in that** the frame made from rigid plastic material (3) has, in its part (3a) forming the gripping part P, two longitudinal grooves (52) for positioning and retaining the layer of viscoelastic plastic material (15).

7. The eating or toilet implement with an adjustable shape, for a person with reduced mobility, according to claim 1, **characterized in that** the end stud (10a) of the frame (3) extends toward the end part T by a vane (30, 40) which, making up the central part of fork or spoon, is bordered by spaced apart fins (31, 41) for positioning and retaining a bead (32, 42) made from elastically deformable plastic material damping the contact of the implement with the mouth or teeth.

8. The eating or toilet implement with an adjustable shape, for a person with reduced mobility, according to claims 1 and 7 together, **characterized in that** each of the fins (31, 41) is bordered by a ring (35, 45) and is provided with anchoring means (33 and 34, 43 and 44) of the elastically deformable material making up the outer beads (32, 42).

9. A method for manufacturing an eating or toilet implement with an adjustable shape, for a person with reduced mobility, said implement being made up of a gripping part P, an end part T coming into contact with food and/or the mouth, and an intermediate part D including a plastically deformable metal core (2), and in which, as defined in claim 1, the metal core (2) is connected to the rigid frame (3) of the gripping part P and is covered by an elastically deformable material (15), **characterized in that** it consists of:
- producing, during a first phase and by overmolding a rigid plastic material on a metal wire segment (2), a sub-assembly E made up of the metal core (2) and the frame (3) of at least the gripping part P, that frame being connected to the metal core by anchor studs (10a, 10b and 11);
- then, in a subsequent phase and after deburring of the sub-assembly E, overmolding the elastically deformable plastic material (15) on it, surrounding the metal core (2) and its studs (10), at least the back of the frame (3) of the gripping part P and at least the end stud (10a) and the periphery of the end part T.

10. The method for manufacturing an eating or toilet implement according to claim 9, **characterized in that**, in the first phase, it consists of positioning the metal wire segment (2) relative to the cavity (7) of the frame (3) by pinching it over its largest length between the two mold elements (5, 6) that form the anchor studs (10a, 10b, 11) on it.
